# EUROPEAN PATENT APPLICATION

(11) **EP 3 786 500 A1**
(43) Date of publication of application: **03.03.2021**
(21) Application number: 19195047.6
(22) Date of filing: 03.09.2019
(51) Int. Cl.: F16K 31/06, H01F 7/08, H01F 7/16, F16K 27/02

(54) **SOLENOID VALVE, ARMATURE TUBE AND ARMATURE TOP FOR A SOLENOID VALVE**

(30) Priority: 02.09.2019 DE 102019123480
(71) Applicant: Danfoss A/S, 6430 Nordborg (DK)
(72) Inventor: JENSEN, Leo Finn, 6430 Nordborg (DK); BIRKELUND, Michael, 6430 Nordborg (DK)
(74) Representative: Patentanwälte Olbricht Buchhold Keulertz

(57) **Abstract**

The invention relates to a solenoid valve comprising a valve body (1), an armature assembly (3) and a coil assembly for actuating the armature assembly (3), wherein the coil assembly is positioned at least partially around the valve body (1) and the armature assembly (3), and wherein the armature assembly comprises an armature tube (31), an armature top (32) and an armature (33) movable relative to the armature top (32) for varying a valve opening.

## Description

The invention relates to a solenoid valve comprising a valve body, an armature assembly and a coil assembly for actuating the armature assembly, wherein the coil assembly is positioned at least partially around the valve body and the armature assembly, and wherein the armature assembly comprises an armature tube, an armature top and an armature movable relative to the armature top for varying a valve opening.

The solenoid valves known from the art make it necessary to fix the armature top to the armature tube in a separate process step, such as welding, during manufacture of the valves. The manufacture of corresponding valves is thereby complicated and made more expensive than necessary.

The present invention aims at solving the above problem by providing a valve which is easier to assemble, and which requires less dedicated equipment for assembly. This goal is achieved by a solenoid valve according to claim 1 and by means of the solenoid valve components according to claims 14 and 15. Further embodiments of the invention are described in dependent claims 2 to 13.

According to the invention, a solenoid valve is provided, which comprises a valve body, an armature assembly and a coil assembly for actuating the armature assembly. The coil assembly is positioned at least partially around the valve body and/or the armature assembly. The coil assembly may be connected to a power supply for generating a magnetic field, which in turn may move at least some parts of the armature assembly. The armature assembly comprises an armature tube, an armature top and an armature movable relative to the armature top for varying a valve opening of the solenoid. The armature of the armature assembly may be movable by the magnetic field generated by the coil assembly. The armature top is press-fitted into the armature tube according to the invention. The press-fit, or interference fit, between two or more components is based on an elastic deformation occurring as the components are placed into each other. The dimensions of the components are chosen to make this elastic deformation occur when placing the components into each other. Once the components are placed into each other, the elasticity of the deformed material holds the components in place. The armature top, the armature tube and the valve body are stationary with respect to each other.

According to the invention, no welding step and no welding equipment is required for fixing the armature top to the armature tube. The assembly of the solenoid is facilitated substantially by the omission of additional assembly steps and the solenoid valve can therefore be assembled more cheaply and quicker than according to the state of the art.

In a preferred embodiment of the invention, the press-fit connection between the armature tube and the armature top is the only direct connection between these two components. This means that according to the invention no other direct or immediate connection between the armature tube and the armature top is necessary to provide a sufficiently durable connection between the two components. The term direct connection is meant to describe a connection, in which the two connected parts touch each other and thus are connected directly to each other, without any intermediate parts in between the two connected parts.

Additionally or alternatively, the press-fit connection between the armature tube and the armature top is situated close to an upper end portion of the armature top opposite the armature. The press-fit connection may be situated in a portion of the armature tube furthest away from the armature. Providing the press-fit connection in an upper end portion of the armature makes it easier to fix the armature top at a precisely defined position along the armature tube. In particular, the upper end portion of the armature top may be positioned easily to abut an armature tube end portion. Therefore, the armature top can be fixed at a position, which can be easily and precisely set.

In another preferred embodiment, the armature tube comprises a small inner diameter section the inner diameter of which is smaller than the outer diameter of the armature top prior to insertion of the armature top into the armature tube and/or that the armature tube comprises a large inner diameter section the inner diameter of which is larger than the outer diameter of the armature top. The diameters and the lengths of the corresponding sections may be selected to enable a defined press-fit between the two mentioned components. Once the armature top has been inserted into the armature tube during assembly of the solenoid valve, the press-fit mounting of the two components will lead to an expansion of the armature tube and to some compression of the armature top. This means that the inner diameter of the armature tube in the press-fit section will correspond to the outer diameter of the armature top in a readily assembled state of the solenoid valve. It is possible to provide a press-fit between only a part of the total length of the armature top and the armature tube. The extent of the press-fit may be selected to provide a sufficiently strong connection between the two components for normal use of the solenoid valve. At the same time, a press-fit can be selected, which is not excessively strong, and which therefore does not require excessive force for inserting the armature top into the armature tube.

In another preferred embodiment, the small inner diameter section of the armature tube extends over 2-7mm, in particular over 3-6mm, and preferably over 4-5mm in an axial direction of the armature tube. The axial direction of the armature tube and the armature top may be the direction along a longitudinal axis of the mentioned components. It has been found, that the claimed ranges enable a press-fit between the armature top and the armature tube, which provides the greatest benefit in terms of strength of connection and ease of manufacture and assembly of the components.

In another embodiment, the inner diameter of the armature tube may be constant along the length of the armature top and the armature top may comprise two distinct sections of different outer diameters. In particular, the armature top may comprise a section of a larger outer diameter positioned at a lower end of the armature top closest to the armature. This design represents an inversion of the context mentioned above, as the outer armature tube may have constant inner diameter and the inner armature top inserted into the armature tube may have varying outer diameters for enabling a press-fit between the two components.

In another embodiment, the armature tube comprises a small outer diameter section, the outer diameter of which is smaller than the inner diameter of the coil assembly and/or that the armature tube comprises a large outer diameter section, the outer diameter of which corresponds to the inner diameter of the coil assembly.

The small outer diameter section of the armature tube may overlap with the section of the armature tube, which is in press-fit connection with the armature top. Once the armature top is inserted into the armature tube and the press-fit is established between the two components, the armature tube is expanded by the armature top. The small outer diameter section of the armature tube is provided to avoid extensive expansion of the armature tube on establishing the press-fit connection. Such extensive expansion of the armature tube could otherwise result in the armature tube becoming too large for insertion into the coil assembly.

The large outer diameter section of the armature tube may be designed to enable an easy assembly and fit of the coil assembly and the armature tube. It is not necessary but possible to design the large outer diameter section of the armature tube to provide a press-fit connection between a bore of the coil assembly and the armature tube.

In another embodiment, the small outer diameter section of the armature tube extends closer to the armature in an axial direction than the small inner diameter section of the armature tube. By providing a corresponding overlap of the two mentioned sections, a bulge can be avoided, which might otherwise occur on creating the press-fit between the armature top and the armature tube.

In another embodiment, the armature tube is formed, in particular printed and/or CNC-machined, integrally with the valve body. A valve body, which combines features of a valve housing containing fluid conduits with features of an armature tube containing armature components of a solenoid armature further simplifies to manufacture of a corresponding solenoid valve. As a separate armature tube becomes obsolete or rather integrated with the valve body, less components have to be manufactured and assembled, thereby simplifying the manufacture and assembly of the entire solenoid valve.

In another embodiment, the armature top and/or the armature tube comprise a shallow lead angle for facilitating the press-fitting of the armature top into the armature tube. The shallow lead angle may be formed as a conically shaped surface provided at the armature top and/or at the armature tube. Said lead angle may be designed to facilitate the insertion of the armature top into the armature tube. In the case of the armature top, said lead angle may be provided close to the upper end portion of the armature top, said upper end portion being the first portion to enter the armature tube, when the press-fit is established. Alternatively or additionally, a lead angle may be provided at the inner side of the armature tube, which is designed to guide the armature top when the armature top is inserted into the armature tube.

In another embodiment, the armature top comprises a bore that extends along the entire length of the armature top. Said bore fluidly connects the area above the armature top to the area below the armature top. Upon insertion of the armature top into the armature tube, air trapped between the armature top and the armature tube can flow out of the entrapment and through the bore. Hence, no air pocket can remain between the armature tube and the armature top when the armature top is fully inserted into the armature tube. The corresponding lack of an air pocket makes it possible to position the armature top and the armature tube to fit snugly to each other. Accordingly, the positioning of the two components can be very precise and easy compared to a device, in which the misalignment caused by an air pocket has to be considered.

In a preferred embodiment, the bore comprises a large diameter portion and a small diameter portion of different diameters, wherein a closing spring is provided at least partially in the large diameter portion, said closing spring acting between the armature top and the armature. By varying the diameter of the bore, a simple way of providing a spring support is provided. The bore and the spring support can be manufactured in the same process step or at least in consecutive process steps, thereby further simplifying the manufacture of the solenoid valve.

In a preferred embodiment, the valve body comprises an inlet connection port and an outlet connection port for connecting pipes to the valve body. More than two connection ports may be provided in other embodiments. The valve body may be designed to allow an easy and fast connection of pipes for enabling fluid flow to and from the valve.

In a preferred embodiment, the valve body comprises a valve seat for limiting the movement of the armature in an axial direction. The valve seat may be attached to the valve body once the armature top and the armature have been inserted into the valve body. The valve seat may be screwed into the valve body.

In a preferred embodiment, the valve body comprises a stop portion for stopping the valve seat at a defined axial position. The stop portion may be formed integrally with the valve body and/or may comprise a largest inner diameter section of the valve body, which has a larger diameter than the section of the valve body, in which the armature top is located.

The invention also relates to an armature tube and an armature top for a solenoid valve according to any of claims 1 to 13. The armature top and the armature tube are the solenoid's subcomponents and may comprise novel and inventive features. All features presently described with respect to the solenoid valve and relating to the armature tube and the armature top may apply to the armature top and the armature tube when claimed on their own.

Further features, details and advantages of the invention arise from the claim set, the present description and the figures:
- Figs. 1a, 1b: perspective views of a solenoid valve;
- Fig. 2a: side view of a valve body and attached piping of a solenoid valve;
- Fig. 2b: sectional side view of a valve body, armature assembly and attached piping of a solenoid valve;
- Fig. 3: enlarged sectional side view of an armature assembly portion; and
- Figs. 4a, 4b: enlarged sectional views of armature top.

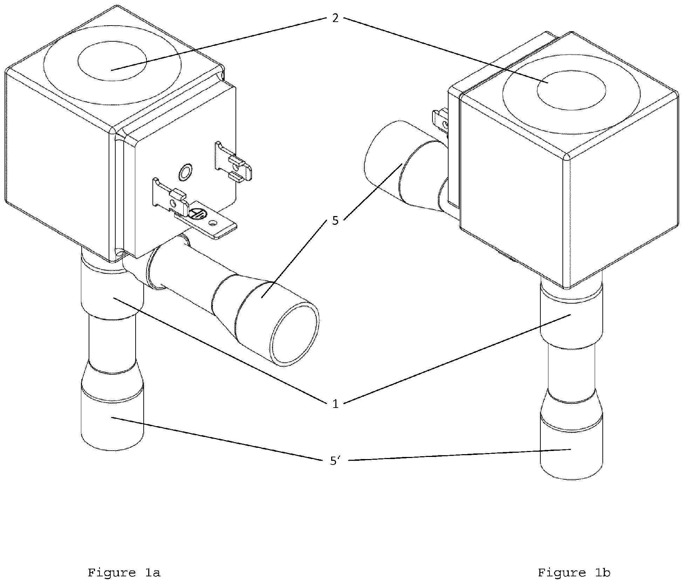

Figures 1a and 1b show two different perspective views of a solenoid valve according to the invention. The solenoid valve comprises a valve body 1 and a coil assembly 2. An armature assembly 3 is not visible but is located inside the valve body 1. The armature assembly 3 will be shown in the following figures.

The coil assembly 2 is positioned partially around the valve body 1 and the armature assembly 3. Therefore, not the entire valve body 1 is visible in figures 1a and 1b. The coil assembly 2 can be connected to a power supply and can generate an electro-magnetic field acting on and moving at least parts of the armature assembly 3 which in turn can open and close the solenoid valve with respect to a fluid flow.

The fluid flow controlled by the solenoid valve can flow through pipes 5, 5' attached to the valve body 1. The coil assembly 2 may be aligned coaxially to an outflow pipe 5' or to an inflow pipe 5.

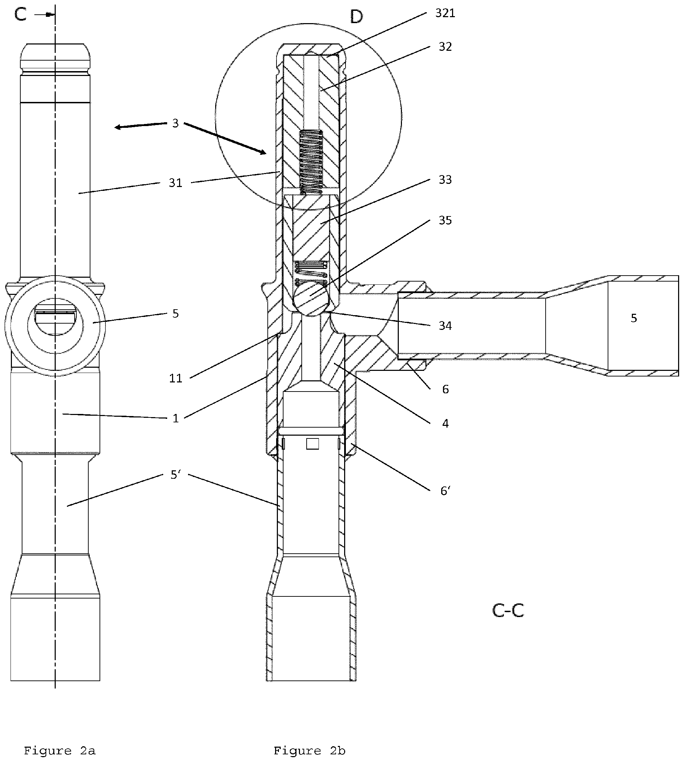

Figure 2a shows a side view of a valve body 1 of a solenoid valve according to the invention connected to pipes 5, 5'. The coil assembly 2 shown in figures 1a and 1b is omitted in figures 2a and 2b for better clarity. The upper side of the valve body 1 forms an armature tube 31 of an armature assembly 3, the inside details of which are shown in figure 2b.

Figure 2b is a detailed sectional side view C-C of the solenoid valve along line C in figure 2a. It shows valve body 1, armature assembly 3 and attached piping 5, 5'. Connection ports 6, 6' for connecting the pipes 5, 5' to the valve body 1 may be formed integrally with the remainder of the valve body 1. The connection ports 6, 6' may be arranged perpendicular to each other.

The armature assembly 3 comprises the external armature tube 31, an armature top 32 and an armature 33 positioned inside the armature tube 31. The armature top 32 is the stationary part of the magnetic circuit of the solenoid. The armature 33 or plunger is the moving part of the magnetic circuit of the solenoid.

The armature tube 31 may be formed integrally with the valve body 1. In particular, the two portions may be printed and/or CNC-machined as one single piece. The armature tube 31 may therefore be an integrated part of the valve body 1.

The armature top 32 is press-fitted into the armature tube 31 and therefore stationary with respect to armature tube 31 and also stationary with respect to the coil assembly 2 shown in figures 1a and 1b. The armature 33 is movable relative to the armature top 32 for varying a valve opening 34. Valve opening 34 is shown in a closed or almost closed position in figure 2b. In this situation, no fluid or hardly any fluid can flow between pipes 5, 5'.

The valve opening 34 is defined by the position of armature 33, ball 35 and valve seat 4. The valve seat 4 limits the movement of the armature 33 in an axial direction. Furthermore, the valve seat 4 may comprise a nozzle, which defines a portion of the valve opening 34. The nozzle determines the valve capacity through its size and/or shape. The valve body 1 comprises a stop portion 11 for stopping the valve seat 4 at a defined axial position inside the valve body. The valve seat 4 can be fixed at the position defined by the stop portion 11 and hence be held stationary relative to the valve body 1.

The ball 35 may be provided inside a cavity of the armature 33 and a spring may be provided between the ball 35 and the armature 33 for preloading the ball 35. The ball 35 may be a steel ball and/or it may close and seal the valve against the valve seat 4.

The valve body 1 may be formed integrally with the armature tube 31 and/or both said components may be made of brass or another metal or alloy, thereby reducing the corresponding manufacturing costs.

All parts contained inside the solenoid valve or rather inside the valve body 1 can be inserted via connection port 6' for connecting pipe 5' to the valve body 1. The valve seat 4 can also be inserted into the valve body 1 via connection port 6' and may limit the movement of the armature 33 inside the valve body 1. The connections ports 6, 6' for connecting pipes 5, 5' may be formed integrally with the valve body 1.

The press-fit connection between the armature tube 31 and the armature top 32 may be the only immediate connection between these two components. A welding connection between these two components may be omitted completely. The press-fit connection between the armature tube 31 and the armature top 32 may be situated at an upper end portion 321 of the armature top 32 opposite and/or furthest away from the armature 33.

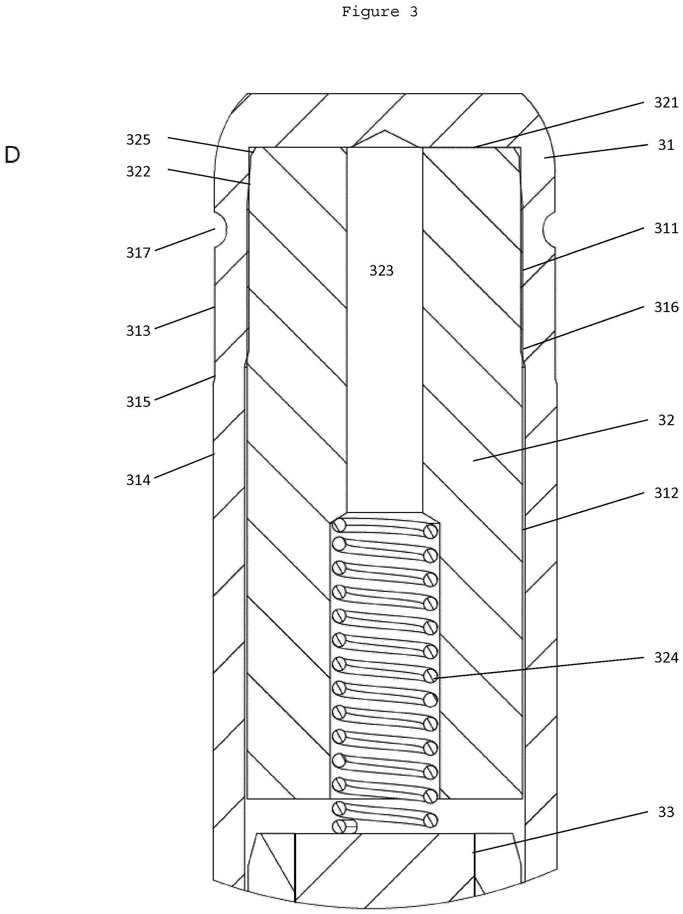

Figure 3 shows enlarged detail D of figure 2b. Inside armature tube 31 armature top 32 is shown to abut an upper end of armature tube 31. The armature tube 31 comprises a small inner diameter section 311 the inner diameter of which is smaller than the outer diameter of the armature top 32 before insertion of the armature top 32 into the armature 31. The small inner diameter section 311 corresponds to the press fit section of the solenoid valve.

The armature top 32 may have an outer diameter of e.g. 8mm while the inner diameter of the armature tubes 31 may be 7,9mm. In this press fit section of the armature tube 31 a press-fit can be established between the armature tube 31 and the armature top 32 upon insertion of the armature top 32 into the armature tube 31. Once the armature top 32 has been inserted into the armature tube 31, elastic deformation occurs, mainly on the thin-walled armature tube 31. The armature tube 31 therefore exerts a press force on the armature top 32 and friction retains the armature top 32 safely in its position. The press in force and press out force of the armature top 32 are significantly larger than the forces from the normal functioning of the valve. The armature top 32 is therefore securely mounted without use of welding or flanging, i.e. without employing the normal methods for retaining an armature top 32.

The press-fit is established close to the upper end portion 321 of the armature top 32 and/or furthest away from the armature 33. The upper end portion 321 is positioned opposite the armature 33 shown at the bottom end of figure 3. Below the press fit section, the inner diameter of the armature tube 31 may be larger than the outer diameter of the armature top 32 and may be 8,15mm for example.

Accordingly, the armature tube 31 comprises a large inner diameter section 312 the inner diameter of which is larger than the outer diameter of the armature top 32 at the corresponding position. Hence, no press-fit between the two components is established at this position. An inner step 316 may accordingly be provided between the large inner diameter section 312 and the small inner diameter section 311.

The small inner diameter section 311 of the armature tube 31 extends over 2-7mm, in particular over 3-6mm, and preferably over 4-5mm in an axial direction of the armature tube 31. The length of the armature top 32 may be around 17-22mm, in particular 19-20mm. The axial direction of the armature tube 31 and of the solenoid valve may correspond to the direction in which the armature 33 is movable.

Additionally to the varying inner diameters of the components, the armature tube 31 may comprise a small outer diameter section 313, the outer diameter of which is smaller than the inner diameter of the coil assembly 2. Furthermore, the armature tube 31 may comprises a large outer diameter section 314, the outer diameter of which corresponds to the inner diameter of the coil assembly 2. An outer step 315 or an angled portion 315 may be provided between the two outer diameter section 313, 314. As can be further seen in figure 3, the small outer diameter section 313 of the armature tube 31 may extend closer to the armature 33 in an axial direction than the small inner diameter section 311 of the armature tube 31. The varying diameters may be selected to provide a press-fit connection between the armature tube 31 and the armature top 32 only in a region close to the upper end portion 321 of the armature top 32. Furthermore, the outer diameter of the armature tube 31 may be selected to create no bulge at the outside of the armature tube 31, once the press-fit is established.

Close to the top of the armature tube 31 and/or in the area of the small inner diameter section 311 of the armature tube 31 there may be a groove 317 for locking the coil assembly 2 to the valve body 1. The section of the armature tube 31 between the groove 317 and the top of the armature tube 31 is a guiding section. This guiding section may be used for e.g. guiding the coil assembly 2 onto the armature tube 31.

Close to the upper end portion 321, the armature top 32 comprises a shallow lead angle 322 for facilitating the press-fitting of the armature top 32 into the armature tube 31. The angle 322 may be selected to be about 5° ±2° or ±1°. The shallow lead angle 322 may be formed as a conically shaped surface and as a part of the circumferential and otherwise mostly cylindrical surface of the armature top 32. The shallow lead angle 322 may be close to a deburred edge 325, provided between the circular upper end portion 321 and the shallow lead angle 322. The deburred edge 325 is provided so that there are no sharp features from the manufacturing process left on the armature top 32 and a person assembling the armature top 32 does not sustain injuries from handling the armature top 32. The armature tube 31 may comprise another lead angle for facilitating the insertion of the armature top 32.

The armature top 32 comprises a bore 323 that extends along the entire length of the armature top 32. The bore 323 may be of cylindrical shape and/or may be oriented coaxially to the armature top 32.

The function of the bore 323 is to provide a fluid connection between the upper end portion 321 of the armature top 32 and the volume below the armature top 32, so that no air can be trapped between the upper end portion 321 and the adjacent end wall of the armature tube 31. As no air can be trapped between the two components, the positioning of the two components can be affected with higher accuracy.

The fluid connection between the upper end portion 321 of the armature top 32 and the volume below the armature top 32 may be established in a different way, such as a differently shaped and/or differently positioned bore or set of bores. Alternatively or additionally, a groove on the outer surface of the armature top 32 may be provided for a fluid connection between the upper end portion 321 and the volume below the armature top.

The bore 323 of the embodiment of figure 3 has two distinct portions, spaced apart in an axial direction: a large diameter portion and a small diameter portion. The large diameter portion shown below the small diameter portion holds a closing spring 324. The closing spring 324 acts between the armature top 32 and the armature 33 and is provided at least partially in the large diameter portion of the bore 323. The closing spring 324 may be preloaded to push the armature 33 in a closed position of the solenoid valve.

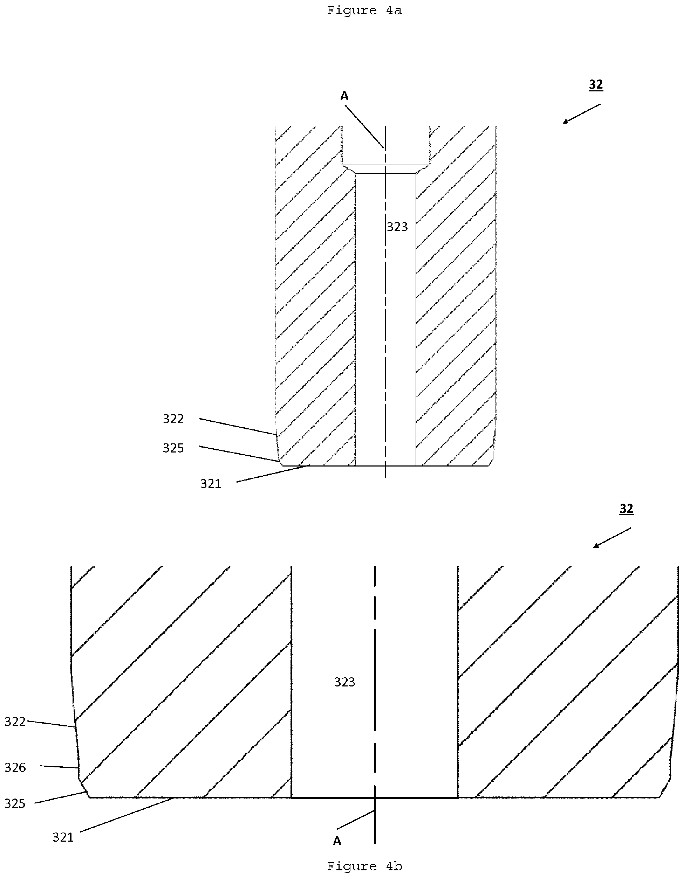

Figure 4a shows the armature top 32 in a more detailed way. The bore 323 of the armature top 32 is shown aligned with the central axis A of the armature top 32. The bore 323 comprises the above mentioned large and small diameter portion. Said two portions of the bore 323 may be shaped cylindrically and may be connected by a conical section shown in figure 4a or by a planar section not shown in the figures. The bore 323 may have a diameter of approximately 2 ± 0,15mm at its small diameter portion. The armature top 32 of the embodiment shown in figure 4a and therefore also the bore 323 may be approximately 19 ± 0,05mm long.

The armature top 32 is shown upside down in figures 4a, 4b compared to figure 3. Accordingly, the upper end portion 321 is shown in the lower regions of figures 4a, 4b. As can be seen in figure 4a and in more detail in figure 4b, between the upper end portion 321 and the shallow lead angle 322 there may be a deburred edge 325. The deburred edge 325 may extend in an axial direction of the armature top 32 and/or may be formed as a circumferential chamfer. Furthermore, between the deburred edge 325 and the shallow lead angle 322, there may a cylindrical section 326, indicated by a short straight line in figure 4b, said short straight line being parallel to the axis A of the armature top 32. The diameter of the cylindrical section 326 is smaller than the inside diameter of the armature tube 31, in which the armature top 32 is inserted for assembly.

The invention is not limited to the above-mentioned embodiments but may be varied in manifold ways. All features and advantages including construction details and spatial configurations which are disclosed in the claims, in the description and in the figures may be essential to the invention, both, individually and in combination with each other.

### Reference numerals

- 1: valve body
- 2: coil assembly
- 3: armature assembly
- 4: valve seat
- 5, 5': pipes
- 6: inlet connection port
- 6': outlet connection port
- 11: stop portion
- 31: armature tube
- 32: armature top
- 33: armature
- 34: valve opening
- 35: ball
- 311: small inner diameter section
- 312: large inner diameter section
- 313: small outer diameter section
- 314: large outer diameter section
- 315: outer step
- 316: inner step
- 317: groove
- 321: upper end portion
- 322: shallow lead angle
- 323: bore
- 324: closing spring
- 325: deburred edge
- 326: cylindrical section
- A: axis

## Claims

1. Solenoid valve comprising
a valve body (1), an armature assembly (3) and a coil assembly (2) for actuating the armature assembly (3), wherein
the coil assembly (2) is positioned at least partially around the valve body (1) and/or the armature assembly (3), and wherein
the armature assembly (3) comprises an armature tube (31), an armature top (32) and an armature (33) movable relative to the armature top (32) for varying a valve opening, **characterized in that**
the armature top (32) is press-fitted into the armature tube (31).

2. Solenoid valve according to claim 1, **characterized in that**
the press-fit connection between the armature tube (31) and the armature top (32) is the only direct connection between these two components and/or that
the press-fit connection between the armature tube (31) and the armature top (32) is situated close to an upper end portion (321) of the armature top (32) opposite the armature (33).

3. Solenoid valve according to claim 1 or 2, **characterized in that**
the armature tube (31) comprises a small inner diameter section (311) the inner diameter of which is smaller than the outer diameter of the armature top (32) prior to insertion of the armature top (32) into the armature tube (31) and/or that the armature tube (31) comprises a large inner diameter section (312) the inner diameter of which is larger than the outer diameter of the armature top (32).

4. Solenoid valve according to claim 3, **characterized in that**
the small inner diameter section (311) of the armature tube (31) extends over 2-7mm, in particular over 3-6mm, and preferably over 4-5mm in an axial direction of the armature tube (31).

5. Solenoid valve according to any of the preceding claims, **characterized in that**
the armature tube (31) comprises a small outer diameter section (313), the outer diameter of which is smaller than an inner diameter of the coil assembly (2) and/or that the armature tube (31) comprises a large outer diameter section (314), the outer diameter of which corresponds to the inner diameter of the coil assembly (2).

6. Solenoid valve according to at least claims 3 and 5, **characterized in that** the small outer diameter section (313) of the armature tube (31) extends closer to the armature (33) in an axial direction than the small inner diameter section (311) of the armature tube (31).

7. Solenoid valve according to any of the preceding claims, **characterized in that**
the armature tube (31) is formed, in particular printed and/or CNC-machined, integrally with the valve body (1).

8. Solenoid valve according to any of the preceding claims, **characterized in that**
the armature top (32) and/or the armature tube (31) comprise a shallow lead angle (322) for facilitating the press-fitting of the armature top (32) into the armature tube (31).

9. Solenoid valve according to any of the preceding claims, **characterized in that**
the armature top (32) comprises a bore (323) that extends along the entire length of the armature top (32).

10. Solenoid valve according to claim 9, **characterized in that**
the bore (323) comprises a large diameter portion and a small diameter portion of different diameters, wherein a closing spring (324) is provided at least partially in the large diameter portion, said closing spring (324) acting between the armature top (32) and the armature (33).

11. Solenoid valve according to any of the preceding claims, **characterized in that**
the valve body (1) comprises an inlet connection port (6) and an outlet connection port (6') for connecting pipes (5, 5') to the valve body (1).

12. Solenoid valve according to any of the preceding claims, **characterized in that**
the valve body (1) comprises a valve seat (4) for limiting the movement of the armature (33) in an axial direction.

13. Solenoid valve according to claim 12, **characterized in that** the valve body (1) comprises a stop portion (11) for stopping the valve seat (4) at a defined axial position.

14. An armature tube (31) for a solenoid valve according to any of claims 1 to 13.

15. An armature top (32) for a solenoid valve according to any of claims 1 to 13.
